(19) Europäisches Patentamt
European Patent Office
Office européen des brevets

(11) **EP 3 472 219 B1**

(12) **EUROPÄISCHE PATENTSCHRIFT**

(45) Veröffentlichungstag und Bekanntmachung des Hinweises auf die Patenterteilung:
**29.04.2020 Patentblatt 2020/18**

(21) Anmeldenummer: **17729153.1**

(22) Anmeldetag: **14.06.2017**

(51) Int Cl.:
*C08G 18/76* (2006.01)       *C08G 18/79* (2006.01)
*C08G 18/09* (2006.01)       *C08G 18/18* (2006.01)
*C08G 18/22* (2006.01)       *C08G 18/42* (2006.01)
*C08G 18/02* (2006.01)

(86) Internationale Anmeldenummer:
**PCT/EP2017/064514**

(87) Internationale Veröffentlichungsnummer:
**WO 2017/216213 (21.12.2017 Gazette 2017/51)**

(54) **VERFAHREN ZUR HERSTELLUNG EINER ISOCYANAT- UND ISOCYANURATGRUPPEN ENTHALTENDEN ZUSAMMENSETZUNG UND DARAUS HERGESTELLTER PUR/PIR-HARTSCHAUMSTOFF**

METHOD FOR PRODUCING AN ISOCYANATE AND ISOCYANURATE GROUPS CONTAINING COMPOSITION AND PUR/A PIR HARD FOAM FORMED FROM SAME

PROCEDE DE FABRICATION D'UNE COMPOSITION CONTENANT DES GROUPES ISOCYANATE ET ISOCYANURATE ET MOUSSE DURE PUR/PIR AINSI PRODUITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.06.2016 EP 16174907**

(43) Veröffentlichungstag der Anmeldung:
**24.04.2019 Patentblatt 2019/17**

(73) Patentinhaber: **Covestro Deutschland AG**
**51373 Leverkusen (DE)**

(72) Erfinder:
• **ARNTZ, Hans-Detlef**
**51491 Overath (DE)**
• **SCHLEIERMACHER, Stephan**
**50259 Pulheim (DE)**

(74) Vertreter: **Levpat**
**c/o Covestro AG**
**Gebäude 4825**
**51365 Leverkusen (DE)**

(56) Entgegenhaltungen:
**US-A1- 2009 105 359**

**EP 3 472 219 B1**

**Beschreibung**

Die vorliegende Erfindung betrifft ein Verfahren zur Herstellung von Isocyanat- und Isocyanuratgruppen enthaltenden Zusammensetzungen unter teilweiser Trimerisierung. Sie betrifft ferner gemäß diesem Verfahren erhältliche Zusammensetzungen, die Herstellung von PUR/PIR-Hartschaumstoffen aus diesen Zusammensetzungen, die Hartschaumstoffe selbst und den Einsatz von derartigen Hartschaumstoffen.

Zur Herstellung von wärmedämmenden Schäumen, wie sie bei der Verkleidung von Hausfassaden eingesetzt werden, werden zur Verbesserung der Brandsicherheit vermehrt Polyisocyanurat-Polyurethanschaumsysteme (PUR/PIR-Schäume) eingesetzt, die durch einen deutlich - bezogen auf die Polyolkomponente - überstöchiometrischen Einsatz des für die Hartschaumherstellung üblichen polymeren Polyisocyanats hergestellt werden. Polymere Polyisocyanate weisen herstellbedingt häufig Chlorgehalte von weniger als 5000 ppm, aber durchaus deutlich mehr als 1000 ppm auf. Der hohe Masseanteil des Isocyanats im PIR-Schaum führt deshalb schnell zu hohen Halogenbeziehungsweise Chlorgehalten oberhalb von 1000 ppm. Ausschreibungen zur Errichtung öffentlicher Bauten bevorzugen jedoch zunehmend Werkstoffe mit nachweislich niedrigem Halogengehalt.

Eine Möglichkeit zur Verringerung des Halogengehalts in PUR/PIR-Schäumen ist eine Behandlung der Isocyanate nach ihrer Synthese. In EP 0 816 333 A1 wird beispielsweise ein der Phosgenierung nachgeschalteter Hydrierungsprozess des noch lösungsmittelhaltigen Roh-MDI beschrieben, der neben einer farblichen Aufhellung des Produkts auch dazu führt, den Gehalt an hydrolysierbarem Chlor herabzusetzen.

US 4,743,627 ist grundsätzlich auch auf die Aufhellung der PUR/PIR-Schäume gerichtet. Das dort beschriebene Verfahren umfasst die Schritte: (a) Trimerisierung von polymerem MDI in Gegenwart eines Trimerisierungskatalysators unter Erhalt eines Isocyanurat-haltigen Polyisocyanats; (b) Desaktivierung des Trimerisierungskatalysators; und (c) Mischen des Isocyanurat-haltigen Polyisocyanats mit monomerem MDI unter Bildung eines Endprodukts mit einer Viskosität, die mit der Viskosität eines Standard pMDI vergleichbar ist und einen Zweikerngehalt von wenigstens 60 Gewichts-% aufweist. Das Endprodukt findet Verwendung in der Herstellung Schäumen, die eine hellere Farbe aufweisen als solche Schäume auf der Basis von Standard-pMDI.

US 2009/105359 AA betrifft ein Verfahren zur Herstellung eines flüssigen, Isocyanuratmodifizierten pMDI mit einer kontrollierten Viskosität. Das Verfahren weist die folgenden Schritte auf: (a) Trimerisierung von konventionellem pMDI mit einer Viskosität zwischen 30 und 300 cps in Gegenwart eines Trimerisierungskatalysators unter Erhalt eines Isocyanurat-haltigen pMDI mit einer Viskosität bei 25 °C im Bereich von 2000 mPas bis 200000mPas; (b) Desaktivierung des Katalysators unter Erhalt einer Mischung enthaltend Isocyanurat-modifiziertes pMDI und desaktivierten Katalysator mit einem Katalysator-Desaktivator; und (c) Mischen der Mischung aus Schritt (b) mit einer Menge an konventionellem pMDI, die ausreichend ist, um eine Mischung zu erhalten mit einer Viskosität bei 25 °C im Bereich von 2000 mPas bis 200000 mPas und einem Gehalt an freien NCO-Gruppen, der mit konventionellem pMDI vergleichbar ist. Das in den Beispielen eingesetzte "Yantai PM-200" (entspricht Wannate PM-200) weist laut Datenblatt einen Gehalt an hydrolysierbarem Chlor, der unterhalb des Gesamtchlorgehalts liegt, von < 2000 ppm auf. Der Gehalt an hydrolysierbarem Chlor entspricht nicht der Acidität aus HCl im Isocyanat, welche im Wesentlichen durch die als Carbaminsäurechlorid enthaltene Menge an HCl bestimmt wird, sondern ist im Allgemeinem bei konventionellem pMDI - wie auch hier bei dem verwendeten Yantai PM-200 - deutlich höher.WO 2017/046274 A der Anmelderin betrifft ein Verfahren zur Herstellung von Polyurethan-Polyisocyanurat-Hartschaumstoffen (PUR/PIR-Hartschaumstoffen) unter Verwendung von teilweise trimerisierten Isocyanatblends. Diese Patentanmeldung betrifft ferner die so erhältlichen Polyurethan-Polyisocyanurat-Hartschaumstoffe sowie deren Verwendung in der Herstellung von Verbundelementen aus den Polyurethan-Polyisocyanurat-Hartschaumstoffen und geeigneten Deckschichten. Ein weiterer Gegenstand dieser Patentanmeldung sind die so erhältlichen Verbundelemente.

Es existiert weiterhin der Bedarf vereinfachten Verfahren zur Herstellung von halogenarmen A-Komponenten für PUR/PIR-Systeme. Die vorliegende Erfindung hat sich die Aufgabe gestellt, solch ein Verfahren bereitzustellen.

Erfindungsgemäß gelöst wird die Aufgabe durch ein Verfahren zur Herstellung einer Isocyanat- und Isocyanuratgruppen enthaltenden Zusammensetzung, umfassend die Schritte:

1) Mischen eines monomeren Polyisocyanats mit polymerem Diphenylmethandiisocyanat unter Erhalt einer Mischung;

2) Reagierenlassen der in Schritt A) erhaltenen Mischung in Gegenwart eines Trimerisierungskatalysators unter Erhalt einer Isocyanat- und Isocyanuratgruppen enthaltenden Zusammensetzung;

wobei das in Schritt 1) eingesetzte monomere Polyisocyanat einen Gesamtchlorgehalt von ≤ 100 ppm (bestimmt durch Röntgenfluoreszenz-Analyse nach DIN 51577 (1994) Teil 4) aufweist.

Durch einen verstärkten Einsatz von halogenarmen monomeren Polyisocyanat-Typen können grundsätzlich regulatorische Halogengrenzwerte im aus der Zusammensetzung hergestellten Hartschaum eingehalten werden. Vorzugsweise weist das das in Schritt 1) eingesetzte monomere Polyisocyanat einen Gesamtchlorgehalt von $\leq$ 80 ppm, mehr bevorzugt $\leq$ 50 ppm auf. Die durch diese Maßnahme herabgesetzte NCO-Funktionalität der Zusammensetzung kann durch eine teilweise Trimerisierung der (in der Regel mit 20 bis 25 mPas bei 25 °C eher niedrigviskosen) Mischung auf einem dem polymeren MDI entsprechenden Wert wieder angehoben werden, so dass sich weder Schaumherstellung noch Schaumeigenschaften negativ von den Standardqualitäten unterscheiden sollten.

Es sei angemerkt, dass in Schritt 1) das monomere Polyisocyanat und das polymere Diphenylmethandiisocyanat aus verschiedenen Quellen stammen. Ein handelsübliches pMDI, welches technisch bedingt auch monomeres MDI enthält, stellt noch nicht die in Schritt 1) erhaltene Mischung dar. Diese wird erst erhalten, wenn zusätzliches monomeres Polyisocyanat, beispielsweise aufgereinigtes 4,4'-MDI, hinzugefügt wird.

Als monomere Polyisocyanate in Schritt 1) kommen die üblichen aliphatischen, cycloaliphatischen, araliphatischen Di- und/oder Polyisocyanate und insbesondere aromatischen Isocyanate zum Einsatz, welche aus der Polyurethanchemie bekannt sind. Aromatische Isocyanate, insbesondere die Isomere der MDI-Reihe (monomeres MDI) sowie TDI sind besonders bevorzugt.

"Oligomeres MDI" bedeutet im Sinne dieser Anmeldung eine Polyisocyanatmischung aus höherkernigen Homologen des MDI, welche mindestens 3 aromatische Kerne und eine Funktionalität von mindestens 3 aufweisen.

Die Bezeichnung "polymeres Diphenylmethandiisocyanat", "polymeres MDI" oder pMDI wird im Kontext der vorliegenden Erfindung verwendet, um eine Mischung aus oligomerem MDI und optional monomerem MDI zu bezeichnen. Typischerweise ist der Monomergehalt eines polymeren MDIs im Bereich von 30 - 50 Gew.-%, bezogen auf die Gesamtmasse des pMDI.

Geeignete Trimerisierungskatalysatoren in Schritt 2) sind beispielsweise Tris(dimethylaminomethyl)phenol, Kaliumacetat und/oder aliphatische quaternäre Ammoniumsalze. Die Trimerisierungsreaktion kann durch Zugabe eines Desaktivators kontrolliert beendet werden. Ein Beispiel hierfür ist Benzoylchlorid.

Die durch das erfindungsgemäße Verfahren erhältliche Isocyanat- und Isocyanuratgruppen enthaltenden Zusammensetzung kann, wie später eingehender erläutert werden wird, zur Herstellung von PUR/PIR-Schäumen eingesetzt werden. In bevorzugten Fällen geschieht dieses sogar ohne Anpassung einer Rezeptur.

Spezielle Ausführungsformen und weitere Aspekte der vorliegenden Erfindung werden nachfolgend wiedergegeben. Sie können beliebig miteinander kombiniert werden, sofern sich aus dem Kontext nicht eindeutig das Gegenteil ergibt. Wird zu der Bestimmung der in dieser Beschreibung genannten Kennwerte eine Messmethode benötigt, wird sich, soweit nicht direkt angegeben, auf die im Beispielsteil genannte bzw. beschriebene Messmethode bezogen.

In einer Ausführungsform ist das in Schritt 1) eingesetzte monomere Polyisocyanat ein durch Destillation gereinigtes monomeres Polyisocyanat.

In einer weiteren Ausführungsform werden in Schritt 1) das monomere Polyisocyanat und das polymere Diphenylmethandiisocyanat in einem Gewichtsverhältnis von $\geq$ 40:60 bis $\leq$ 80:20 eingesetzt. Vorzugsweise beträgt das Gewichtsverhältnis $\geq$ 45:55 bis $\leq$ 75:25.

In einer weiteren Ausführungsform wird die Reaktion in Schritt 2) bei einem berechneten Isocyanurat-Gehalt von $\geq$ 10 Gewichts-% bis $\leq$ 40 Gewichts-%, vorzugsweise $\geq$ 20 Gewichts-% bis $\leq$ 35 Gewichts-%, beendet. Der prozentuale Isocyanuratgehalt der nach Schritt 2) erhaltenen Zusammensetzung (,,Isocyanurat% (A2) in der nachfolgenden Formel) lässt sich in Kenntnis des Gewichtsanteils an NCO-Gruppen in der Mischung nach Schritt 1 ("NCO% im Ausgangsblend A1" in der nachfolgenden Formel) und dem NCO-Gehalt einer Reaktionsprobe ("NCO% im Produkt A2" in der nachfolgenden Formel) aus der NCO-Abnahme nach folgender Rechnung bestimmt:

$$\text{Isocyanurat\% (A2)} = \frac{(\text{NCO\% im Ausgangsblend A1}) - (\text{NCO\% im Produkt A2})}{0.5 \cdot (\text{NCO\% im Ausgangsblend A1})} \cdot 100$$

Die Bestimmung des Gewichtsanteils an NCO-Gruppen erfolgt gemäß EN ISO 11909:2007.

In einer weiteren Ausführungsform wird die Reaktion in Schritt 2) bei einer Viskosität der erhaltenen Zusammensetzung von $\leq$ 10000 mPas, vorzugsweise $\leq$ 8000 mPas, bei 25 °C (DIN EN ISO 3219:1994) beendet.

In einer weiteren Ausführungsform ist das in Schritt 1) eingesetzte monomere Polyisocyanat Diphenylmethandiisocyanat. Vorzugsweise handelt es sich um monomeres 4,4'-MDI. Die in Schritt 1) erhaltene Mischung kann beispielsweise die folgenden Eigenschaften haben:

ein Gesamtgehalt an monomerem MDI von 55-80 Gew.-% (bezogen auf das Gesamtgewicht der Mischung)

eine Viskosität von < 30 mPas, bevorzugt < 28 mPas und besonders bevorzugt < 27 mPas bei 25°C (DIN EN ISO 3219:1994)

Die Trimerisierung von hoch monomerhaltigem pMDI führt bei einem Trimerisationsgrad von $\geq$ 10% zu flüssigen,

lagerstabilen Isocyanat-Blends, die auf bestehenden Anlagen zu Dämmschäumen gleicher Qualität (Wärmeleitzahl, Dimensionsstabilität, Druckfestigkeit etc.) wie die aus den Standard-pMDI Typen umgesetzt werden können, wobei der Halogengehalt deutlich unter dem geforderten Grenzwert bleibt.

In einer weiteren Ausführungsform umfasst das Verfahren weiterhin den Schritt:

3) Hinzufügen von polymerem Diphenylmethandiisocyanat zu der nach Schritt 2) erhaltenen Zusammensetzung.

Ein weiterer Aspekt der vorliegenden Erfindung ist eine Isocyanat- und Isocyanuratgruppen enthaltende Zusammensetzung, welche durch ein erfindungsgemäßes Verfahren erhältlich ist.

Die Erfindung betrifft ebenfalls ein Verfahren zur Herstellung eines PUR/PIR-Hartschaumstoffes durch Umsetzung eines PUR/PIR-Systems aus einer Isocyanatkomponente (A) und einer Polyolformulierung (B) in Gegenwart von Treibmitteln (C) und Katalysatoren (D), wobei die Isocyanatkomponente (A) eine erfindungsgemäße Isocyanat- und Isocyanuratgruppen enthaltende Zusammensetzung umfasst.

Die PUR/PIR-Systeme finden bevorzugt zur Herstellung von Verbundelementen Verwendung. Üblicherweise findet hier die Verschäumung in kontinuierlicher oder diskontinuierlicher Weise gegen mindestens eine Deckschicht statt.

Durch Umsetzung des PUR/PIR-Systems sind die PUR/PIR-Hartschaumstoffe erhältlich. Bei der Umsetzung werden Isocyanatkomponente A und die Polyolformulierung B im Allgemeinen in solchen Mengen zur Umsetzung gebracht, dass die Isocyanat-Kennzahl des Schaums $\geq 300$ bis $\leq 500$, bevorzugt $\geq 320$ bis $\leq 450$, mehr bevorzugt $\geq 360$ bis $\leq 420$ beträgt.

Unter der Isocyanat-Kennzahl (auch Kennzahl oder Isocyanat-Index genannt) wird dabei der Quotient aus der tatsächlich eingesetzten Stoffmenge [Mol] an Isocyanat-Gruppen und der für vollständigen Umsatz aller Isocyanat-reaktiven Gruppen stöchiometrisch benötigten Stoffmenge [Mol] an Isocyanat-Gruppen, multipliziert mit 100, verstanden. Da für die Umsetzung eines Mols einer Isocyanat-reaktiven Gruppe ein Mol einer Isocyanat-Gruppe benötigt wird, gilt:

$$\text{Kennzahl} = (\text{Mole Isocyanat-Gruppen} / \text{Mole Isocyanat-reaktive Gruppen}) \cdot 100$$

Vorzugsweise werden die Komponenten A und B des Polyurethansystems so gewählt, dass der resultierende Schaumstoff eine Druckfestigkeit (bei einer Rohdichte 60 kg/m$^3$) von größer 0,2 N/mm$^2$, bevorzugt größer 0,25 N/mm$^2$, besonders bevorzugt größer 0,3 N/mm$^2$, gemessen nach DIN 53421:1984-06, aufweist.

Die Isocyanatkomponente A kann beispielsweise die folgenden Eigenschaften haben:

15 - 25 Gew.-%, bevorzugt 18 - 25 Gew.-% Isocyanuratgruppen,
30 - 55 Gew.-%, bevorzugt 35 - 45 Gew.-%, monomeres MDI,
NCO- Gehalt von 23 - 30 Gew.-% (EN ISO 11909:2007),
jeweils bezogen auf das Gesamtgewicht der Isocyanatkomponente.

Zur Herstellung der Isocyanatkomponente A kann die erfindungsgemäße Isocyanat- und Isocyanuratgruppen enthaltende Zusammensetzung optional mit weiteren Isocyanaten abgemischt werden. Als Isocyanate kommen die üblichen aliphatischen, cycloaliphatischen, araliphatischen Di- und/oder Polyisocyanate und insbesondere aromatischen Isocyanate zum Einsatz, welche aus der Polyurethanchemie bekannt sind. Aromatische Isocyanate, insbesondere die Homologen und Isomeren der MDI-Reihe sowie TDI sind besonders bevorzugt. Weiterhin kann es sich bei den zur Abmischung geeigneten Isocyanaten um Polyurethan-Prepolymere bzw. modifizierten Isocyanate handeln. Der Begriff "Polyurethan-Prepolymer" bezeichnet insbesondere reaktive Intermediate in der Reaktion von Isocyanaten zu Polyurethan-Polymeren. Sie werden hergestellt durch die Reaktion einer Polyolkomponente mit einem Überschuss einer Isocyanatkomponente. Bevorzugte modifizierte Isocyanate schließen ein: Harnstoff-modifizierte Isocyanate; Biuret-modifizierte Isocyanate; Urethan-modifizierte Isocyanate; Isocyanurat-modifizierte Isocyanate; Allophanatmodifizierte Isocyanate; Carbodiimid-modifizierte Isocyanate; Uretdion-modifizierte Isocyanate und Uretonimin-modifizierte Isocyanate. Solche modifizierten Isocyanate sind im Handel verfügbar und werden durch Reaktion eines Isocyanats mit einer geringeren als der stöchiometrischen Menge einer Isocyanat-reaktiven Verbindung oder mit sich selbst hergestellt.

Als Polyole für die Polyolformulierung B kommen bevorzugt Verbindungen auf Basis von Polyesterolen oder Polyetherolen zum Einsatz. Die Funktionalität der Polyetherole und/oder Polyesterole beträgt im Allgemeinen 1,9 bis 8, bevorzugt 2,4 bis 7, besonders bevorzugt 2,9 bis 6.

Die Polyole weisen eine Hydroxylzahl von größer als 70 mg KOH/g, bevorzugt größer als 100 mg KOH/g, besonders bevorzugt größer als 120 mg KOH/g auf. Als Obergrenze der Hydroxylzahl hat sich im Allgemeinen 1000 mg KOH/g, bevorzugt 900 mg KOH/g, besonders 800 mg KOH/g bewährt. Die oben angegebenen OH-Zahlen beziehen sich auf die Gesamtheit der Polyole in der Polyolformulierung B, was nicht ausschließt, dass einzelne Bestandteile der Mischung höhere oder niedrigere Werte aufweisen.

Bevorzugt enthält die Polyolformulierung B Polyetherpolyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls, das 2 bis 8, vorzugsweise 3 bis 8, reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden. Geeignete Alkylenoxide sind beispielsweise Tetrahydrofuran, 1, 3-Propylenoxid, 1,2-bzw. 2, 3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen Alkohole in Betracht, wie beispielsweise Glycerin, Trimethylolpropan (TMP), Pentaerythrit, Saccharose, Sorbit, sowie Amine, wie beispielsweise Methylamin, Ethylamin, Isopropylamin, Butylamin, Benzylamin, Anilin, Toluidin, Toluoldiamin, Naphthylamin, Ethylendiamin, Diethylentriamin, 4,4'-Methylendianilin, 1,3-Propandiamin, 1,6-Hexandiamin, Ethanolamin, Diethanolamin, Triethanolamin und ähnliche. Weiterhin können als Startermoleküle Kondensationsprodukte aus Formaldehyd, Phenol und Diethanolamin bzw. Ethanolamin, Formaldehyd, Alkylphenolen und Diethanolamin bzw. Ethanolamin, Formaldehyd, Bisphenol A und Diethanolamin bzw. Ethanolamin, Formaldehyd, Anilin und Diethanolamin bzw. Ethanolamin, Formaldehyd, Kresol und Diethanolamin bzw. Ethanolamin, Formaldehyd, Toluidin und Diethanolamin bzw. Ethanolamin sowie Formaldehyd, Toluoldiamin (TDA) und Diethanolamin bzw. Ethanolamin und ähnliche verwendet werden. Bevorzugt werden als Startermolekül TMP und TDA verwendet.

Die Polyolformulierung B kann als weiteren Bestandteil Vernetzer enthalten. Unter Vernetzer werden Verbindungen verstanden, die ein Molekulargewicht von 60 bis weniger als 400 g/mol aufweisen und mindestens 3 gegenüber Isocyanaten reaktive Wasserstoffatome aufweisen. Ein Beispiel hierfür ist Glycerin. Die Vernetzer werden im allgemeinen in einer Menge von 1 bis 10 Gew.-%, bevorzugt von 2 bis 6 Gew.-%, bezogen auf das Gesamtgewicht der Polyolformulierung B (jedoch ohne physikalische Treibmittel), eingesetzt.

Die Polyolformulierung B kann ebenfalls Kettenverlängerungsmittel enthalten, die der Erhöhung der Vernetzungsdichte dienen. Unter Kettenverlängerungsmittel werden Verbindungen verstanden, die ein Molekulargewicht von 60 bis weniger als 400 g/mol aufweisen und 2 gegenüber Isocyanaten reaktive Wasserstoffatome aufweisen. Beispiele hierfür sind Butandiol, Diethylenglykol, Dipropylenglykol sowie Ethylenglykol. Die Kettenverlängerungsmittel werden im Allgemeinen in einer Menge von 2 bis 20 Gew.-%, bevorzugt von 4 bis 15 Gew.-%, bezogen auf das Gesamtgewicht der Polyolformulierung B (jedoch ohne physikalische Treibmittel), eingesetzt.

Vernetzer und Kettenverlängerungsmittel können in der Polyolmischung einzeln oder in Kombination eingesetzt werden.

Zur Herstellung der PUR/PIR-Hartschäume werden weiterhin chemische und/oder physikalische Treibmittel C eingesetzt.

Als chemische Treibmittel sind Wasser oder Carbonsäuren, insbesondere Ameisensäure als chemisches Treibmittel bevorzugt. Das chemische Treibmittel wird im Allgemeinen in einer Menge von 0,1 bis 5 Gew.-%, insbesondere von 1,0 bis 3,0 Gew.-%, bezogen auf das Gewicht der Komponente B, eingesetzt.

Als physikalische Treibmittel versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, sowie Ether, Ester, Ketone und/oder Acetale. Diese werden üblicherweise in einer Menge von 1 bis 30 Gew.-%, bevorzugt 2 bis 25 Gew.-%, besonders bevorzugt 3 bis 20 Gew.-%, bezogen auf das Gesamtgewicht der Komponente B eingesetzt.

Zur Herstellung der PUR/PIR-Hartschäume werden ferner Katalysatoren D eingesetzt. Als Katalysatoren D werden üblicherweise Verbindungen verwendet, welche die Reaktion der Hydroxylgruppen enthaltenden Verbindungen der Komponenten B mit den Isocyanatgruppen der Komponente A beschleunigen.

In Betracht kommen bevorzugt organische Zinnverbindungen, wie Zinn-(II)-salze von organischen Carbonsäuren, und/oder basische Aminverbindungen, bevorzugt tertiäre Amine, wie beispielsweise Triethylamin, und/oder 1,4-Diaza-bicyclo-(2,2,2)-octan. Die Katalysatoren werden im Allgemeinen in einer Menge von 0,001 bis 5 Gew.-%, insbesondere von 0,05 bis 2,5 Gew.-% Katalysator, bezogen auf das Gewicht der Komponente B, eingesetzt.

Der Reaktionsmischung können gegebenenfalls auch noch weitere Hilfs- und Zusatzstoffe (E) einverleibt werden. Unter solchen werden die im Stand der Technik bekannten und üblichen Hilfs- und Zusatzstoffe verstanden. Genannt seien beispielsweise oberflächenaktive Substanzen, Schaumstabilisatoren, Zellregler, Füllstoffe, Farbstoffe, Pigmente, Flammschutzmittel, Antistatika, Hydrolyseschutzmittel und/oder fungistatisch und bakteriostatisch wirkende Substanzen.

In einer Ausführungsform wird die Isocyanatkomponente (A) durch die folgenden Schritte ausgewählt:

- Auswählen einer Rezeptur für eine Isocyanatkomponente, wobei die Rezeptur ein polymeres Diphenylmethandiisocyanat mit einer Viskosität von ≥ 600 mPas bei 25 °C (DIN EN ISO 3219:1994) enthält;

- zumindest teilweises Ersetzen des polymeren Diphenylmethandiisocyanats mit einer Viskosität von ≥ 600 mPas bei 25 °C (DIN EN ISO 3219:1994) in der Rezeptur durch eine erfindungsgemäße Zusammensetzung.

Die Erfindung ist ebenfalls auf einen PUR/PIR-Hartschaumstoff gerichtet, der durch ein erfindungsgemäßes Verfahren erhältlich ist. PUR/PIR-Hartschaumstoffe im Sinne der vorliegenden Erfindung sind insbesondere solche PUR/PIR-Schäume, deren Rohdichte gemäß DIN EN ISO 3386-1-98 in der Fassung vom September 2010 im Bereich von 15 kg/m$^3$ bis 300 kg/m$^3$ liegt und deren Druckfestigkeit nach DIN EN 826 in der Fassung vom Mai 1996 im Bereich von 0,1 MPa bis 3 MPa liegt.

Ein weiterer Aspekt der Erfindung ist die Verwendung eines erfindungsgemäßen PUR/PIR-Hartschaumstoffes als Isolationsschaum in der Herstellung von Verbundelementen.

Ebenso betrifft die Erfindung ein Verbundelement, umfassend eine Hartschaumschicht, welche einen erfindungsgemäßen PUR/PIR-Hartschaumstoff enthält, sowie mindestens eine Deckschicht. Die Deckschicht wird hierbei zumindest teilweise von einer den erfindungsgemäßen PUR-/PIR-Hartschaum umfassenden Schicht kontaktiert. Typischerweise ist das Material der Deckschicht Aluminium, Stahl, Bitumen, Papier, ein Mineral-Vliesstoff, ein organische Fasern umfassender Vliesstoff, eine Kunststoff-Platte, eine Kunststoff-Folie und/oder eine Holzplatte.

In einer weiteren Ausführungsform des Verbundelements ist dieses in Form eines Isolationspaneels.

Die Erfindung wird anhand der nachfolgenden Beispiele näher beschrieben, ohne jedoch darauf beschränkt zu sein.

Eingesetzte Materialien:

Desmodur 44M: durch Destillation gereinigtes 4,4'-Diphenylmethandiisocyanat (Covestro); Isocyanatgehalt 33,6 Gew.-%; Gesamtchlorgehalt bestimmt in Anlehnung an das Verfahren der oxidativen Mikrocoulometrie DIN EN 14077:2003 von weniger als 50 ppm

Desmodur 44V20L: polymeres Diphenylmethandiisocyanat (Covestro); Isocyanatgehalt 31,5 Gew.%, Viskosität bei 25°C ca. 200 mPas

Desmodur 44V70L: polymeres Diphenylmethandiisocyanat (Covestro); Isocyanatgehalt 30,9 Gew.-%, Viskosität bei 25°C ca. 700 mPas

Benzoylchlorid: bezogen von Sigma-Aldrich; 99,5%ig; Siedepunkt 198 °C

Tris(dimethylamino-methyl)phenol: bezogen von Sigma-Aldrich 95%ig; Brechungsindex n20/D 1.516, Siedepunkt: 130-135 °C

Polyol 1: Aromatisches Polyesterdiol mit einer OH-Zahl von 240 mg/kg KOH und einer Viskosität von 15600 mPas bei 25°C

Triethylphosphat: Flammschutzmittel (Lanxess)

Tegostab B8421: Schaumstabilisator (Evonik)

Desmorapid 1792: Kaliumacetat-Katalysator (Covestro)

Herstellung der Isocyanatmischung A1 (Isocyanatmischung vor Trimerisierung)

Desmodur 44M und Desmodur 44V20L (Ansatzgröße 3 kg, Gewichtsverhältnis 40:60) wurden in einen 5-1-Dreihalskolben mit Rührer unter Stickstoff überführt und bei Raumtemperatur homogenisiert. Die erhaltene Isocyanatmischung A1 wies eine Viskosität von ca. 25 mPas bei 25°C auf.

| | Einheit | Isocyanatgehalt | Gewichtsteile |
|---|---|---|---|
| Desmodur 44M | Gew.-Tle. | 33,6 | 60,00 |
| Desmodur 44V20L | Gew.-Tle. | 31,5 | 40,00 |
| Isocyanatmischung A1 | | | 100 |

Herstellung eines Isocyanurat-haltigen Isocyanatblends (A2)

Die zuvor hergestellte Isocyanatmischung A1 wurde unter Stickstoff auf eine Temperatur von 60-80 °C aufgeheizt und unter Katalyse von 2,4,6-Tris(dimethylaminomethyl)phenol (900 ppm) einer Trimerisierungsreaktion unterworfen. In zeitlichen Intervallen von etwa 15 Minuten wurden dem Reaktionsgemisch Proben zur Bestimmung des Isocyanatgehalts entnommen. Eine unter den Reaktionsbedingungen zeitlich lineare Abnahme des NCO-Werts ermöglichte eine gute Abschätzung der notwendigen Reaktionszeit (ca. 2h) bis zum Erreichen des Ziel-NCO-Werts. Die Reaktion wurde durch Zugabe von Benzoylchlorid (200 ppm) bei Erreichen eines Isocyanatgehalts von 26,2 Gew.-% abgestoppt. Der Isocyanuratgehalt des so hergestellten Isocyanatblends A2 (Isocyanurat% (A2)) wurde aus der NCO-Abnahme nach folgender Rechnung bestimmt:

$$\text{Isocyanurat}\% \, (A2) = \frac{(\text{NCO\% im Ausgangsblend A1}) - (\text{NCO\% im Produkt A2})}{0.5 \cdot (\text{NCO\% im Ausgangsblend A1})} \cdot 100$$

Aus dem erhaltenen Produkt A2 wurden als Blend I und Blend II bezeichnete Mischungen mit Desmodur 44V20L beziehungsweise Desmodur 44V70L hergestellt. Die Eigenschaften sind in der nachfolgenden Tabelle wiedergegeben:

Tabelle 1:

|  | Einheit | NCO [%] | Produkt A2 | Blend I | Blend II |
|---|---|---|---|---|---|
| Desmodur 44M | Gew.-Tle. | 33,6 | 60,00 |  |  |
| Desmodur 44V20L | Gew.-Tle | 31,5 | 40,00 | 16,65 |  |
| Desmodur 44V70L | Gew.-Tle. | 30,9 |  |  | 16,65 |
| Produkt A2 | Gew.-Tle. | 28,2 |  | 83,35 | 83,35 |
| Summe | Gew.-Tle. |  | 100,00 | 100,00 | 100,00 |
| Isocyanatgehalt | [Gew.-%] |  | 28,2 | 28,4 | 28,4 |
| Viskosität bei 25°C [mPas] | [mPa*s] |  | n.d. | 603 | 673 |
| Isocyanurat-Gehalt (berechnet) | [Gew.-%] |  | 27,8 | 23,2 | 23,2 |
| Gesamthalogengehalt |  |  | 486 | 640 | 710 |

Die so hergestellten Isocyanurat-haltigen Blends I und II werden gegen eine Standardhartschaum-PUR/PIR-Polyolformulierung verarbeitet.

Die Ergebnisse sind in nachfolgender Tabelle denen gegenübergestellt, die sich aus der gleichen Polyolformulierung in Kombination mit Desmodur 44V70L ergeben. Die Beispiele 1 und 2 sind erfindungsgemäße Beispiele.

Tabelle 2:

| Parameter | Einheit | Vergleich | Beispiel 1 | Beispiel 2 |
|---|---|---|---|---|
| Polyol 1 | Gew.-Tle. | 63,5 | 63,5 | 63,5 |
| Triethylphosphat | Gew.-Tle | 15 | 15 | 15 |
| Tegostab B8421 | Gew.-Tle. | 2 | 2 | 2 |
| Wasser | Gew.-Tle. | 0,8 | 0,8 | 0,8 |
| Desmorapid 1792 | Gew.-Tle. | 3,6 | 2,8 | 2,8 |
| n-Pentan | Gew.-Tle. | 18 | 18 | 18 |
| Desmodur 44V70L | Gew.-Tle. | 223 |  |  |
| Blend I | Gew.-Tle. |  | 223 |  |
| Blend II | Gew.-Tle. |  |  | 223 |

(fortgesetzt)

| Parameter | Einheit | Vergleich | Beispiel 1 | Beispiel 2 |
|---|---|---|---|---|
| Index (100 NCO/OH) | | 395 | 373 | 373 |
| Startzeit | s | 9 | 8 | 9 |
| Abbindezeit | s | 43 | 39 | 42 |
| Klebfreizeit | s | 60 | 55 | 60 |
| Kernrohdichte | kg/m$^3$ | 31,0 | 30,8 | 30,7 |
| Oberfläche | | zäh | zäh | zäh |
| Schauminnenfläche | | zäh | zäh | zäh |
| Zellgröße | | 2 | 2 | 2 |
| Zell struktur | | 2,5 | 2,5 | 2,5 |
| Dim. Stab. Temperatur | °C | 100 | 100 | 100 |
| Dim. Stab. 24h L1 | % | 0,7 | 0,3 | 0,3 |
| Dim. Stab. 24h L2 | % | 0,6 | 0,3 | 0,5 |
| Dim. Stab. 24h D | % | -0,5 | -0,4 | -0,4 |
| Dim. Stab. Temperatur | °C | -22 | -22 | -22 |
| Dim. Stab. 24h L1 | % | 0,0 | -0,1 | 0,0 |
| Dim. Stab. 24h L2 | % | -0,2 | 0,0 | 0,0 |
| Dim. Stab. 24h D | % | 0,0 | 0,1 | 0,1 |
| Kantenbeflammung nach EN11925-2:2010 | | Schaum | Schaum | Schaum |
| Mittelwert der größten Flammenhöhen | mm | 155 | 148 | 148 |
| größte Flammenhöhe Prüfkörper 1 | mm | 160 | 145 | 145 |
| größte Flammenhöhe Prüfkörper 2 | mm | 150 | 150 | 145 |
| größte Flammenhöhe Prüfkörper 3 | mm | 155 | 150 | 150 |
| größte Flammenhöhe Prüfkörper 4 | mm | 155 | 145 | 150 |
| Klassifizierung nach EN 13501-1:2010 | | F | E | E |
| Gesamthalogengehalt | ppm | 1150 | 440 | 490 |

Bei gleicher Einsatzmenge der Isocyanatkomponenten auf 100 Gewichtsteile Polyolformulierung sinkt der Mischungsindex aufgrund des gegenüber Desmodur 44V70L niedrigeren Isocyanatgehalts des PIR-Blends, aber es ergeben sich sehr ähnliche, eher bessere Ergebnisse bei der Schaumbeurteilung. Speziell bei der Brandklassifizierung nach EN11925 für normalentflammbare Baustoffe wird die Klasse E zuverlässiger erreicht.

Die Versuche zeigen, dass der Einsatz Isocyanurat-haltiger Isocyanatblends die Herstellung halogenarmer Polyisocyanurat-Polyurethan-Schäume ermöglicht, die beim Vergleich der physikalisch/mechanischen Eigenschaften denen aus pMDI hergestellten nicht nachstehen.

Methoden:

Startzeit: die Zeit in Sekunden, die vom Beginn des Mischens bis zum erkennbaren Start der Reaktion vergeht.

Abbindezeit: die Zeit in Sekunden, die vom Beginn des Mischens bis zur Verfestigung der Schaumoberfläche vergeht.

Klebfreizeit: die Zeit in Sekunden, die vom Beginn des Mischens vergeht, bis die Schaumoberfläche sich nicht mehr klebrig anfühlt.

Zellgröße/Zellstruktur: Skalierung zwischen 1 und 6; wobei 1 sehr fein bzw. sehr gleichmäßig und 6 sehr grob bzw. unregelmäßig bedeutet

Oberfläche/Schauminnenfläche: qualitative Unterscheidung zwischen spröde, sandig und zäh Kernrohdichte: DIN EN ISO 845:2009 "Schaumstoffe aus Kautschuk und Kunststoffen - Bestimmung der Rohdichte"

Isocyanatgehalt: EN ISO 11909:2007 "Bestimmung des Isocyanat-Gehaltes"

Viskosität: DIN EN ISO 3219:1994 "Kunststoffe - Polymere/Harze in flüssigem, emulgiertem oder dispergiertem Zustand"

Hydroxylzahl (OH-Zahl): die Bestimmung der OH-Zahl erfolgte gemäß der Vorschrift der DIN 53240-1: 2007.

Dimensionsstabilität (Dim.Stab.): Die Schaumprobe wird mindestens 24h bei 20-25 °C gelagert, bevor aus dem Kern zwei Schaumstoffwürfel mit den Dimensionen $10 \cdot 10 \cdot 10 \ cm^3$ entnommen werden. Nach Markierung der drei Raumrichtungen eines jeden Würfels wurden diese mit einem Messschieber vermessen und je einer bei -22 °C und 100 °C für 24 Stunden gelagert. Danach werden die Würfel erneut bei Raumtemperatur vermessen. Die Dimensionsstabilität ist die prozentuale Änderung der Kantenlänge $\varepsilon L$ aller drei Raumrichtungen A, B und C, wobei C immer der Aufschäum-richtung entspricht. $\varepsilon L = (L - OL)/OL \cdot 100\%$ mit L = Kantenlänge des Prüfkörpers nach Lagerung, OL = Kantenlänge des Prüfkörpers vor Lagerung. Ein Schaum hat diesen Test bestanden, wenn die Veränderung in jeder Richtung bei -22 °C und 100 °C unter 1% ist.

Gesamtchlor- bzw. Gesamthalogen-Gehalt:

a) Bestimmung in Anlehnung an das Verfahren der oxidativen Mikrocoulometrie gemäß DIN EN 14077:2003 (Hartschäume)

b) Bestimmung des Gesamtchlor- und -bromgehalts nach DIN 51577 (1994) Teil 4 (Röntgenfluoreszenz-Analyse der Polyisocyanate))

## Patentansprüche

1. Verfahren zur Herstellung einer Isocyanat- und Isocyanuratgruppen enthaltenden Zusammensetzung, umfassend die Schritte:

   1) Mischen eines monomeren Polyisocyanats mit polymerem Diphenylmethandiisocyanat unter Erhalt einer Mischung;
   2) Reagierenlassen der in Schritt A) erhaltenen Mischung in Gegenwart eines Trimerisierungskatalysators unter Erhalt einer Isocyanat- und Isocyanuratgruppen enthaltenden Zusammensetzung;

   **dadurch gekennzeichnet, dass**
   das in Schritt 1) eingesetzte monomere Polyisocyanat einen Gesamtchlorgehalt von $\leq$ 100 ppm (bestimmt durch Röntgenfluoreszenz-Analyse gemäß DIN 51577 (1994) Teil 4) aufweist.

2. Verfahren gemäß Anspruch 1, wobei das in Schritt 1) eingesetzte monomere Polyisocyanat ein durch Destillation gereinigtes monomeres Polyisocyanat ist.

3. Verfahren gemäß Anspruch 1 oder 2, wobei in Schritt 1) das monomere Polyisocyanat und das polymere Diphenylmethandiisocyanat in einem Gewichtsverhältnis von $\geq$ 40:60 bis $\leq$ 80:20 eingesetzt werden.

4. Verfahren gemäß einem der Ansprüche 1 bis 3, wobei die Reaktion in Schritt 2) bei einem berechneten Isocyanurat-Gehalt von $\geq$ 10 Gewichts-% bis $\leq$ 40 Gewichts-% beendet wird.

5. Verfahren gemäß einem der Ansprüche 1 bis 4, wobei die Reaktion in Schritt 2) bei einer Viskosität der erhaltenen Zusammensetzung von $\leq$ 10000 mPas bei 25 °C (DIN EN ISO 3219:1994) beendet wird.

6. Verfahren gemäß einem der Ansprüche 1 bis 5, wobei das in Schritt 1) eingesetzte monomere Polyisocyanat Diphenylmethandiisocyanat ist.

7. Verfahren gemäß einem der Ansprüche 1 bis 6, weiterhin umfassend den Schritt:
   3) Hinzufügen von polymerem Diphenylmethandiisocyanat zu der nach Schritt 2) erhaltenen Zusammensetzung.

8. Isocyanat- und Isocyanuratgruppen enthaltende Zusammensetzung, erhältlich durch ein Verfahren gemäß einem der Ansprüche 1 bis 7.

9. Verfahren zur Herstellung eines PUR/PIR-Hartschaumstoffes durch Umsetzung eines PUR/PIR-Systems aus einer Isocyanatkomponente (A) und einer Polyolformulierung (B) in Gegenwart von Treibmitteln (C) und Katalysatoren (D), **dadurch gekennzeichnet, dass** die Isocyanatkomponente (A) eine Isocyanat- und Isocyanuratgruppen enthaltende Zusammensetzung gemäß Anspruch 8 umfasst.

10. Verfahren gemäß Anspruch 9, wobei die Isocyanatkomponente (A) durch die folgenden Schritte ausgewählt wird:

   - Auswählen einer Rezeptur für eine Isocyanatkomponente, wobei die Rezeptur ein polymeres Diphenylmethandiisocyanat mit einer Viskosität von ≥ 600 mPas bei 25 °C (DIN EN ISO 3219:1994) enthält;
   - zumindest teilweises Ersetzen des polymeren Diphenylmethandiisocyanats mit einer Viskosität von ≥ 600 mPas bei 25 °C (DIN EN ISO 3219:1994) in der Rezeptur durch eine Zusammensetzung gemäß Anspruch 8.

11. PUR/PIR-Hartschaumstoff, erhältlich durch ein Verfahren gemäß Anspruch 9 oder 10.

12. Verwendung eines PUR/PIR-Hartschaumstoffes gemäß Anspruch 11 als Isolationsschaum in der Herstellung von Verbundelementen.

13. Verbundelement, umfassend eine Hartschaumschicht, welche einen PUR/PIR-Hartschaumstoff gemäß Anspruch 11 enthält, sowie mindestens eine Deckschicht.

14. Verbundelement gemäß Anspruch 13, wobei das Material der Deckschicht Aluminium, Stahl, Bitumen, Papier, ein Mineral-Vliesstoff, ein organische Fasern umfassender Vliesstoff, eine Kunststoff-Platte, eine Kunststoff-Folie und/oder eine Holzplatte ist.

15. Verbundelement gemäß Anspruch 14 in Form eines Isolationspaneels.


**Claims**

1. Process for producing a composition containing isocyanate and isocyanurate groups, which comprises the steps:

   1) mixing a monomeric polyisocyanate with polymeric diphenylmethane diisocyanate to give a mixture;
   2) allowing the mixture obtained in step A) to react in the presence of a trimerization catalyst to give a composition containing isocyanate and isocyanurate groups;

   **characterized in that**
   the monomeric polyisocyanate used in step 1) has a total chlorine content of ≤ 100 ppm (determined by X-ray fluorescence analysis in accordance with DIN 51577 (1994) part 4).

2. Process according to Claim 1, wherein the monomeric polyisocyanate used in step 1) is a monomeric polyisocyanate which has been purified by distillation.

3. Process according to Claim 1 or 2, wherein, in step 1), the monomeric polyisocyanate and the polymeric diphenylmethane diisocyanate are used in a weight ratio of from ≥ 40:60 to ≤ 80:20.

4. Process according to any of Claims 1 to 3, wherein the reaction in step 2) is stopped at a calculated isocyanurate content of from ≥ 10% by weight to ≤ 40% by weight.

5. Process according to any of Claims 1 to 4, wherein the reaction in step 2) is stopped at a viscosity of the resulting composition of ≤ 10 000 mPas at 25°C (DIN EN ISO 3219:1994).

6. Process according to any of Claims 1 to 5, wherein the monomeric polyisocyanate used in step 1) is diphenylmethane diisocyanate.

7. Process according to any of Claims 1 to 6 which further comprises the step:
   3) adding polymeric diphenylmethane diisocyanate to the composition obtained after step 2).

8. Composition containing isocyanate and isocyanurate groups which is obtainable by a process according to any of Claims 1 to 7.

9. Process for producing a rigid PUR/PIR foam by reaction of a PUR/PIR system composed of an isocyanate component (A) and a polyol formulation (B) in the presence of blowing agents (C) and catalysts (D), **characterized in that** the isocyanate component (A) comprises a composition containing isocyanate and isocyanurate groups according to Claim 8.

10. Process according to Claim 9, wherein the isocyanate component (A) is selected by means of the following steps:

   - selection of a formulation for an isocyanate component, where the formulation contains a polymeric diphenylmethane diisocyanate having a viscosity of $\geq$ 600 mPas at 25°C (DIN EN ISO 3219:1994);
   - at least partial replacement of the polymeric diphenylmethane diisocyanate having a viscosity of $\geq$ 600 mPas at 25°C (DIN EN ISO 3219:1994) in the formulation by a composition according to Claim 8.

11. Rigid PUR/PIR foam obtainable by a process according to Claim 9 or 10.

12. Use of a rigid PUR/PIR foam according to Claim 11 as insulating foam in the production of composite elements.

13. Composite element comprising a rigid foam layer containing a rigid PUR/PIR foam according to Claim 11 and also at least one covering layer.

14. Composite element according to Claim 13, wherein the material of the covering layer is aluminum, steel, bitumen, paper, a mineral nonwoven, a nonwoven comprising organic fibers, a polymer plate, a polymer film and/or a wooden board.

15. Composite element according to Claim 14 in the form of an insulation panel.


**Revendications**

1. Procédé pour la préparation d'une composition contenant des groupes isocyanate et isocyanurate, comprenant les étapes :

   1) mélange d'un polyisocyanate monomérique avec un diisocyanate de diphénylméthane polymérique avec obtention d'un mélange ;
   2) le fait de laisser réagir le mélange obtenu dans l'étape A) en présence d'un catalyseur de trimérisation avec obtention d'une composition contenant des groupes isocyanate et isocyanurate ;

   **caractérisé en ce que**
   le polyisocyanate monomérique utilisé dans l'étape 1) présente une teneur totale en chlore $\leq$ 100 ppm (déterminée par analyse de fluorescence X selon la norme DIN 51577 (1994) partie 4).

2. Procédé selon la revendication 1, le polyisocyanate monomérique utilisé dans l'étape 1) étant un polyisocyanate monomérique purifié par distillation.

3. Procédé selon la revendication 1 ou 2, où dans l'étape 1) le polyisocyanate monomérique et le diisocyanate de diphénylméthane polymérique sont utilisés en un rapport pondéral de $\geq$ 40:60 à $\leq$ 80:20.

4. Procédé selon l'une quelconque des revendications 1 à 3, la réaction dans l'étape 2) étant terminée en cas d'une teneur calculée en isocyanurate $\geq$ 10 % poids à $\leq$ 40 % en poids.

5. Procédé selon l'une quelconque des revendications 1 à 4, la réaction dans l'étape 2) étant terminée en cas d'une viscosité de la composition obtenue de $\leq$ 10 000 mPas à 25 °C (norme DIN EN ISO 3219:1994).

6. Procédé selon l'une quelconque des revendications 1 à 5, le polyisocyanate monomérique utilisé dans l'étape 1) étant le diisocyanate de diphénylméthane.

**7.** Procédé selon l'quelconque des revendications 1 à 6, comprenant en outre l'étape :
3) ajout de diisocyanate de diphénylméthane polymérique à la composition obtenue après l'étape 2).

**8.** Composition contenant des groupes isocyanate et isocyanurate pouvant être obtenue par un procédé selon l'une quelconque des revendications 1 à 7.

**9.** Procédé pour la préparation d'une mousse dure PUR/PIR par la transformation d'un système PUR/PIR composé d'un composant (A) d'isocyanate et d'une formulation (B) de polyol en présence d'agents propulseurs (C) et de catalyseurs (D),
**caractérisé en ce que**
le composant (A) d'isocyanate comprend une composition contenant des groupes isocyanate et isocyanurate selon la revendication 8.

**10.** Procédé selon la revendication 9, le composant (A) d'isocyanate étant choisi par les étapes suivantes :

- choix d'une recette pour un composant d'isocyanate, la recette contenant un diisocyanate de diphénylméthane polymérique doté d'une viscosité de $\geq$ 600 mPas à 25 °C (norme DIN EN ISO 3219:1994) ;
- remplacement au moins partiel du diisocyanate de diphénylméthane polymérique doté d'une viscosité de $\geq$ 600 mPas à 25 °C (norme DIN EN ISO 3219:1994) dans la recette par une composition selon la revendication 8.

**11.** Mousse dure PUR/PIR, pouvant être obtenue par un procédé selon la revendication 9 ou 10.

**12.** Utilisation d'une mousse dure PUR/PIR selon la revendication 11 en tant que mousse d'isolation dans la préparation d'éléments composites.

**13.** Élément composite, comprenant une couche de mousse dure, qui contient une mousse dure PUR/PIR selon la revendication 11, ainsi qu'au moins une couche de couverture.

**14.** Élément composite selon la revendication 13, le matériau de la couche de couverture étant de l'aluminium, de l'acier, du bitume, du papier, une étoffe non-tissée minérale, une étoffe non-tissée comprenant des fibres organiques, une plaque de plastique, une feuille de plastique et/ou une plaque de bois.

**15.** Élément composite selon la revendication 14 sous forme d'un panneau d'isolation.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0816333 A1
- US 4743627 A
- US 2009105359 AA
- WO 2017046274 A